# EUROPEAN PATENT APPLICATION

(11) **EP 1 801 902 A2**
(43) Date of publication of application: **27.06.2007**
(21) Application number: 06026219.3
(22) Date of filing: 18.12.2006
(51) Int. Cl.: H01M 4/14, H01M 4/62, H01M 10/06

(54) **Lead acid battery**

(30) Priority: 21.12.2005 JP 2005368346
(71) Applicant: Shin-Kobe Electric Machinery Co., Ltd., Chuo-ku Tokyo 104-0044 (JP)
(72) Inventor: Honbo, Kyoko, c/o Hitachi Ltd., Chiyoda-ku Tokyo 100-8220 (JP); Sakai, Masanori, c/o Hitachi Ltd., Chiyoda-ku Tokyo 100-8220 (JP); Kondo, Yasuo c/o Hitachi Ltd., Chiyoda-ku Tokyo 100-8220 (JP); Sakamoto, Takeo, 8-1 Akashi-cho Chuo-ku Tokyo 104-0044 (JP)
(74) Representative: Strehl Schübel-Hopf & Partner

(57) **Abstract**

It is an object of the present invention to provide a lead acid battery which generates a higher power than the conventional lead acid battery does. To this end, the lead acid battery of the present invention is characterized in that electrodes are formed, each of the electrodes having a structure in which a metallic powder is disorderly distributed, the metallic powder being composed of a metallic lead powder or a lead alloy powder containing lead as a main element of composition. In the lead acid battery, a charge collection network of a metallic powder containing lead is formed. As a result, the lead acid battery generates a higher power than the conventional lead acid battery does.

## Description

### Technical Field

The present invention relates to a lead acid battery used as a battery for automobile and the like.

### Background Art

The lead acid battery, which is of a type of secondary batteries, is widely used as the battery for automobile because it has excellent low temperature characteristics as compared to other types of the secondary batteries, and because it is advantageous in cost.

Incidentally, as a lead acid battery for automobile in recent years, a high power lead acid battery for automobile has been required, the battery being capable of instantaneously drawing a large amount of current so as to make it possible to start an engine under low temperature conditions at any time. It is estimated that the amount of electric power required for a motor and electronic equipment mounted on an automobile will continue to increase in the future as well. For this reason, development of a lead acid battery with a higher power is awaited to cope with this situation.

In addition, it is estimated that the number of "idling-stop vehicles" and hybrid vehicles will increase because the concern about environmental problems has been increasing in recent years. Development of a lead acid battery which continues to constantly generate a high power for a long period of time is awaited because the above vehicles frequently repeat a charging-discharging cycle of the lead acid battery.

As a method of manufacturing electrodes from a metallic powder, a method disclosed in Japanese Patent Laid-Open No. 2000-80406, for example, is known.

An object of the present invention is to provide a lead acid battery which generates a higher power as compared to the conventional lead acid battery.

### Disclosure of the Invention

The present inventors have found that the above problem can be solved by using, as electrodes of a lead acid battery, electrodes each of which contains an active material and a metallic powder containing lead composed of a metallic lead powder or a lead alloy powder, and each of which has a structure in which the metallic powder containing lead is disorderly distributed.

Specifically, the present invention encompasses the following inventions.
(1) A lead acid battery including electrodes for a lead acid battery, each of the electrodes containing an active material and a metallic powder containing lead composed of any one of a metallic lead powder and a lead alloy powder, and each of the electrodes having a structure in which the metallic powder containing lead is disorderly distributed.
(2) The lead acid battery as recited in the above (1), in which the lead alloy contains 0.1 to 10 percent by weight of at least one selected from the group consisting of Sn, Sb and Ca.
(3) The lead acid battery as recited in any one of the above (1) and (2), in which the metallic powder containing lead is a rapidly-solidified powder having a crystal size of 20 µm or less.
(4) The lead acid battery as recited in any one of the above (1) to (3), in which the metallic powder containing lead has an average particle size of 0.01 to 500 µm.
(5) The lead acid battery as recited in any one of the above (1) to (4), in which the active material contains red lead and at least one selected from the group consisting of monobasic lead sulfate, tribasic lead sulfate and tetrabasic lead sulfate.
(6) The lead acid battery as recited in any one of the above (1) to (5), further including, as each of charge collectors, any one of an expanded metal, a cast grid, a rolled grid, a rolled plate and a perforated metal, each of which is made of a lead alloy.
(7) The lead acid battery as recited in any one of the above (1) to (6), in which 15 to 70 percent by weight of the metallic powder containing lead is present in the electrodes excluding the charge collectors.
(8) The lead acid battery as recited in any one of the above (1) to (7), which is the lead acid battery of a spiral type.

The present invention provides the lead acid battery which generates a higher power than the conventional lead acid battery does.

### Brief Description of the Drawings

Fig. 1 shows an example of an electrode used in a lead acid battery of the present invention.
Fig. 2 shows an example of an electrode used in the lead acid battery of the present invention.
Fig. 3 shows an example of an electrode used in the lead acid battery of the present invention.
Fig. 4 shows an example of an electrode used in the lead acid battery of the present invention.
Fig. 5 shows an example of an electrode used in the lead acid battery of the present invention.
Fig. 6 shows a single plate lead acid battery which is constructed by using a plurality of any one of the electrodes of the present invention.
Fig. 7 shows a lead acid battery for automobile which is constructed by using a plurality of any one of the electrodes of the present invention.
Fig. 8 shows a lead acid battery of a spiral type which is constructed by using a plurality of any one of the electrodes of the present invention.
Fig. 9 shows discharging time and discharging voltage of lead acid batteries of example 2 and comparative example 2.
Fig. 10 shows discharging time and discharging voltage of lead acid batteries of example 3 and comparative example 3.
Fig. 11 shows discharging time and discharging voltage of lead acid batteries of example 4 and comparative example 4.

### Detailed Description of the Preferred Embodiment

The lead acid battery of the present invention is characterized by including electrodes each of which contains an active material and a lead-containing metallic powder composed of a metallic lead powder or a lead alloy powder, and each of which has a structure in which the lead-containing metallic powder is disorderly distributed.

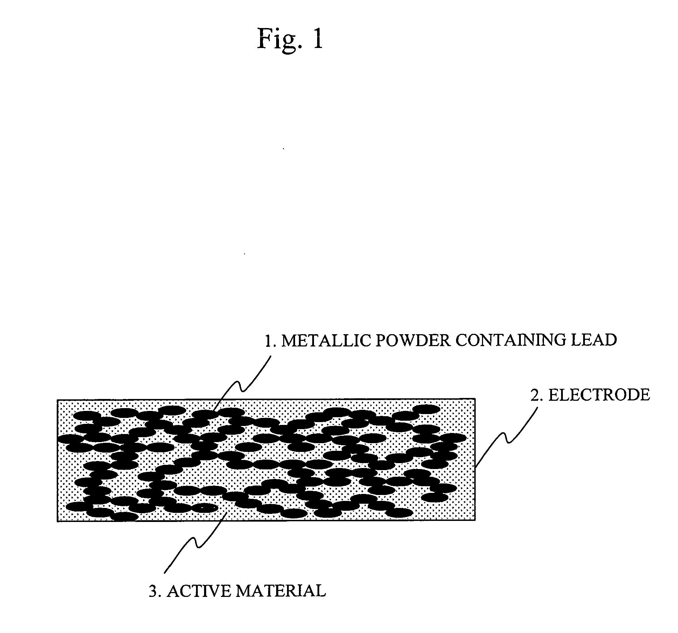

"The structure in which the lead-containing metallic powder is disorderly distributed" refers to presence of the lead-containing metallic powder in the form of fine particles without unevenness of density (evenly dispersed) in the electrodes. The particles of the lead-containing metallic powder preferably form a three-dimensional network structure by contacting with one another (refer to Fig. 1). By using electrodes in each of which such a three-dimensional charge collecting network structure is formed, it is possible to obtain the lead acid battery which has extremely low internal resistance, and which thus generates a high power.

The lead-containing metallic powder is used in order to establish electron conductivity (electroconductive path) among active materials and electron conductivity (electroconductive path) between each of terminals or a metal containing lead and an active material. As the lead-containing metallic powder used in the electrodes of the present invention, it is possible to use a powder of metallic lead or powder of a lead alloy. The lead alloy to be used contains 0.1 to 10 percent by weight, preferably 0.2 to 5.0 percent by weight, of at least one element selected from the group consisting of, for example, Sn, Sb and Ca. Moreover, it is more preferable that the lead-containing metallic powder is a rapidly-solidified powder such as a gas atomized powder and a water atomized powder having a particle size of 0.01 to 20 µm. The average particle size of the lead-containing metallic powder is not limited in particular, but is usually 0.01 to 500 µm, and is preferably 0.1 to 50 µm. In the present invention, the lead-containing metallic powder to be used is the one not subjected to heat treatment such as sintering. A Metal having a low melting point such as lead tends to grow to large-sized crystal particles resulting form coarsening, or to allow the particles thereof to be bound to one another to form coarse particles, by heat treatment such as sintering. In this case, the dispersion state is changed so that a distribution structure different from the structure targeted in the present invention is formed. As a result, by employing heat treatment it is not possible to obtain the advantages of the present invention.

Moreover, as the active material, it suffices to use the one normally used in a lead acid battery, and it is possible to enumerate, for example, a lead powder (PbOx (x is 0.5 to 0.9)), lead monoxide, lead sulfate, lead dioxide, lead or the like. In the present invention, is preferable to use an active material which contains at least one selected from the group consisting of monobasic lead sulfate, tribasic lead sulfate and tetrabasic lead sulfate, and red lead.

The electrodes used in the present invention may further include charge collectors in order to improve charge collecting efficiency. As each of the charge collectors, it is possible to enumerate, for example, an expanded metal, a cast grid, a rolled grid, a rolled plate, a perforated metal, or the like.

It should be noted that an amount of the lead-containing metallic powder to be used is preferably 15 to 70 percent by weight of the weight of the entire electrodes (excluding the charge collectors).

The present invention is hereinafter described using a particular embodiment with reference to drawings, but not limited to these descriptions

In an electrode shown in Fig. 1, a lead-containing metallic powder 1 is disorderly dispersed in an active material 3 of an electrode 2, and the particles of the metallic powder 1 form a three-dimensional network structure by contacting with one another.

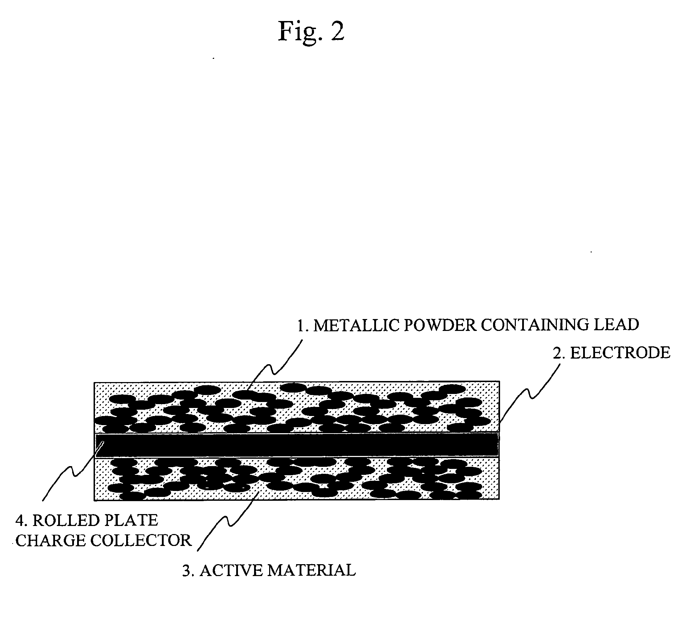

In an electrode shown in Fig. 2, a rolled plate 4 is used as a charge collector. As in the case of Fig. 1, the lead-containing metallic powder 1 is disorderly dispersed in the active material 3 of the electrode 2, and the particles of the metallic powder 1 form a three-dimensional network structure by contacting with one another. And the three-dimensional network structure contacts with the rolled plate charge collector 4.

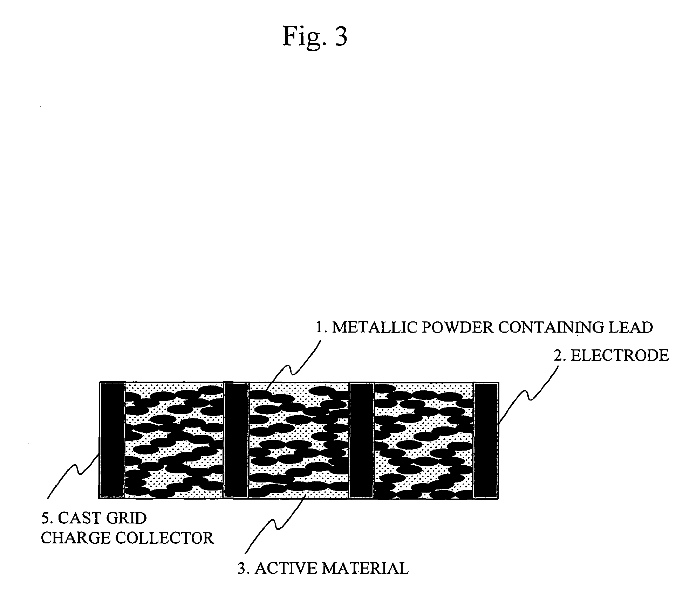

In an electrode shown in Fig. 3, a cast grid 5 is used as a charge collector. As in the case of Fig. 1, the lead-containing metallic powder 1 is disorderly dispersed in the active material 3 of the electrode 2, and the particles of the metallic powder 1 form a three-dimensional network structure by contacting with one another. And the three-dimensional network structure contacts with the rolled plate charge collector 5.

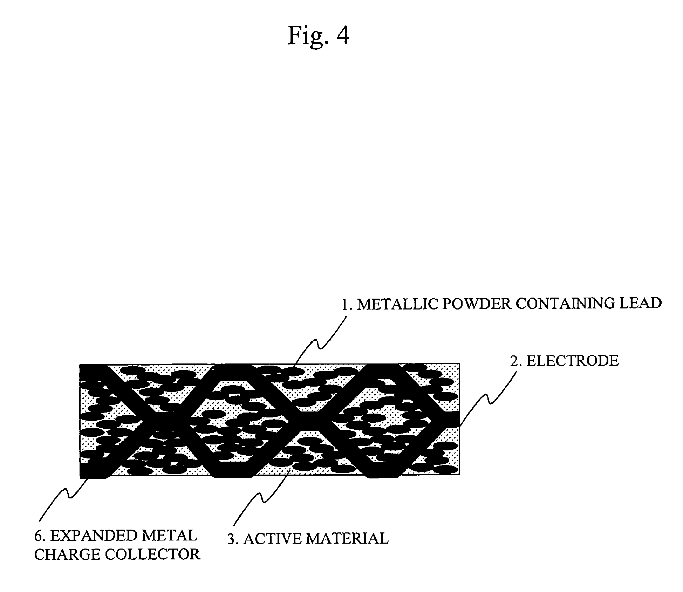

In an electrode shown in Fig. 4, an expanded metal 6 is used as a charge collector. As in the case of Fig. 1, the lead-containing metallic powder 1 is disorderly dispersed in the active material 3 of the electrode 2, and the particles of the metallic powder 1 form a three-dimensional network structure by contacting with one another. And the three-dimensional network structure contacts with the expanded metal charge collector 6.

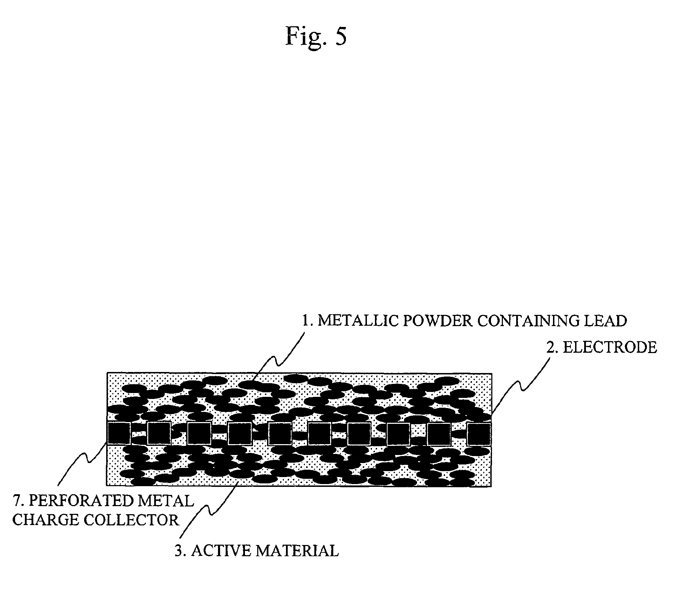

In an electrode shown in Fig. 5, a perforated metal 7 is used as a charge collector. As in the case of Fig. 1, the lead-containing metallic powder 1 is disorderly dispersed in the active material 3 of the electrode 2, and the particles of the metallic powder 1 form a three-dimensional network structure by contacting with one another. And the three-dimensional network structure contacts with the perforated metal charge collector 7.

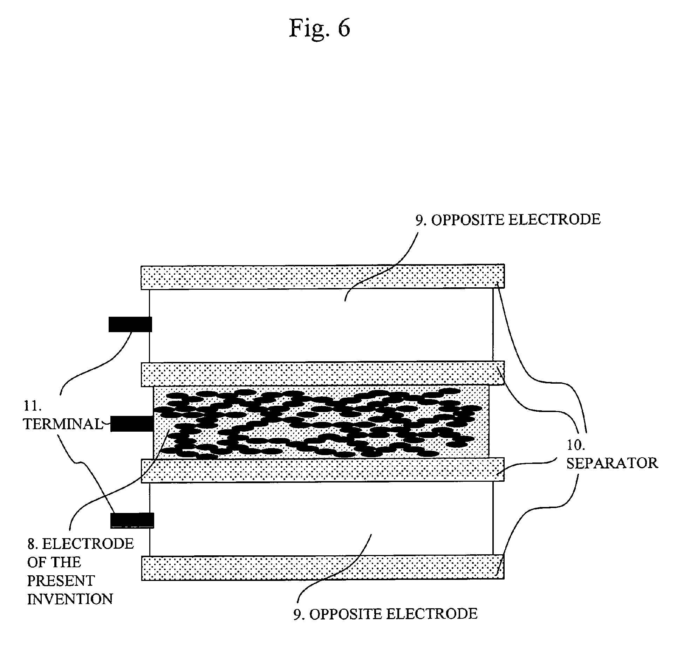

A single plate lead acid battery shown in Fig. 6 is constructed using any one of the electrodes shown in Figs 1 to 5. The single plate lead acid battery includes an electrode 8 shown in Figs 1 to 5 and two sheets of opposite electrodes disposed to interpose the electrode 8. The electrode 8 and the opposite electrodes 9 are isolated from one another by separators in which electrolyte solution containing sulfuric acid (H₂SO₄) is impregnated. The electrode 8 and the two sheets of the opposite electrodes 9 are each provided with a terminal. In the single plate lead acid battery, the opposite electrodes 9 are negative poles in a case where the electrode 8 is a positive pole. The opposite electrodes 9 are positive poles in a case where the electrode 8 is a negative pole.

Each of the opposite electrodes may be a known electrode. For example, it is possible to obtain an opposite electrode by filling a paste of an active material containing a lead powder (PbOx: 0.5≤x≤0.9 in a formula), red lead and the like into a charge collecting grid composed of lead-calcium-tin alloy, and by drying it. As is known, a chemical conversion treatment causes lead dioxide (PbO₂) to be formed on the positive pole, and lead (Pb) to be formed on the negative pole. In addition, the electrodes having any one of the constructions shown in Figs 1 to 5 may be used as the opposite electrodes, in the same way as in the case of the electrode 8 according to the present invention

The operations of the single plate lead acid battery on which to mount the electrode 8 according to the present embodiment are hereinafter described.

A positive pole reaction shown by the following formula (1) progresses on the positive plate of the single plate lead acid battery.

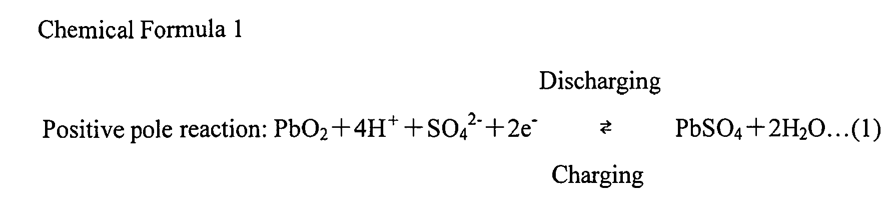

Specifically, as shown in formula (1), lead dioxide (PbO₂) which is an active material is reacted with hydrogen ions (H⁺) to deposit lead sulfate (PbSO₄) and to form water in the positive plate during discharging. The reversal reaction progresses in the positive plate during charging.

In the negative plate, a negative pole reaction progresses as shown in the following formula (2).

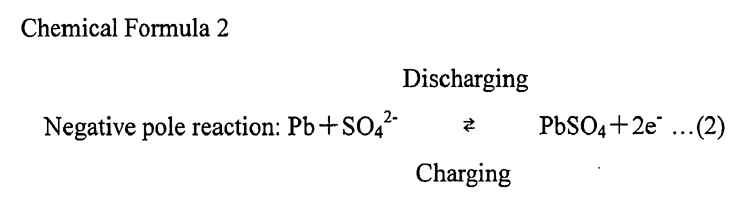

Specifically, as shown in formula (2), lead (Pb) which is an active material is reacted with ions of sulfuric acid (SO₄²⁻) to deposit lead sulfate (PbSO₄) and to release electrons (e⁻) in the negative plate during discharging. The reversal reaction progresses in the negative plate during charging.

In such a single plate lead acid battery, the use of the electrode according to the present invention as a positive pole causes electrons (e⁻) to move fast by the disorderly distributed lead-containing metallic powder. As a result, the reaction shown in the above formula (1) is accelerated, and the concentrated formation of lead sulfate (PbSO₄) in one area is prevented, thus resulting in increased capacitance of the positive pole in a high rate.

On the other hand, the use of the electrode according to the present invention as a negative pole causes electrons (e⁻) to move fast by the disorderly distributed lead-containing metallic powder. As a result, the reaction shown in the above formula (2) is accelerated, and the concentrated formation of lead sulfate (PbSO₄) in one area is prevented, thus resulting in increased capacitance of the negative pole in a high rate.

As described above, the use of the positive pole and/or negative pole in which the lead-containing metallic powder is disorderly distributed in the single plate lead acid battery enables the lead acid battery to have increased capacitance and a high power in the high rate.

A lead acid battery for automobile and the electrode body incorporated therein are hereinafter described as an example of the present invention with reference to a drawing as appropriate.

Description is herein made.

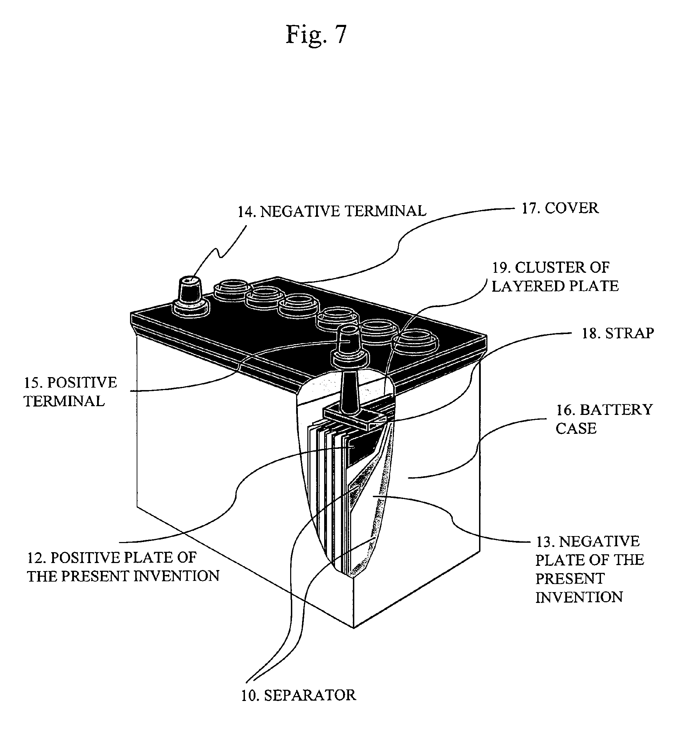

Fig. 7 is a perspective view for describing the construction of the lead acid battery for automobile, in which the electrode according to the present invention is incorporated. Fig. 7 has a cutout section in the part of the battery case and the electrode body for the purpose of describing the inside of the battery.

As shown in Fig. 7, the lead acid battery for automobile includes, for example, positive plates 12 and negative plates 13 according to the present invention like the ones shown in Figs 1 to 5. The lead acid battery for automobile is constructed in the same manner as that of battery type 38B19 except that the positive plate 12 and negative plate 13 according to the present invention are used instead of the positive plate and the negative plate of the known lead acid battery for automobile (for example, the lead acid battery of battery type 38B19). The positive plate 12 and the negative plate 13 are disposed with one of separators 10 interposed between them, the separators being made of resin such as polyethylene. The positive plate 12, the negative plate 13 and one of the separators 10 constitute a set, and the plurality of sets are superimposed on one another to form a cluster of layered plates 19. Six clusters of layered plates 19 are housed in a battery case 16 together with electrolyte solution containing sulfuric acid (H₂SO₄). The positive plates 12 in the cluster of layered plates 19 are electrically connected with one another in parallel. The negative plates 13 in the cluster of layered plates 19 are electrically connected with one another in parallel. The clusters of layered plates 19 are electrically connected with one another in series.

By using the positive plates and the negative plates according to the present invention, it is possible to obtain the lead acid battery for automobile with both the battery's capacitance being high in a high rate and the battery's power being high.

As an example of the present invention, a lead acid battery of a spiral type and the electrode body incorporated therein are hereinafter described with reference to a drawing as appropriate.

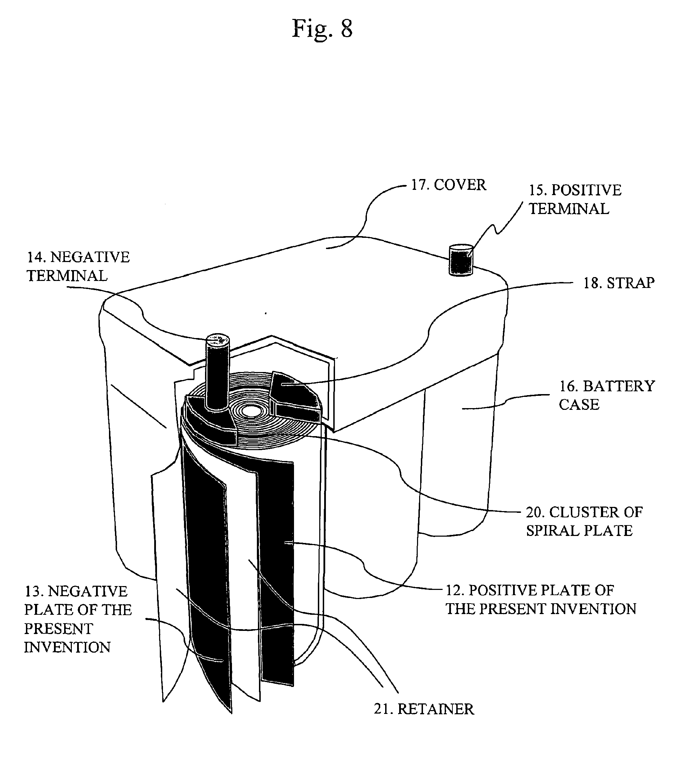

Fig. 8 is a perspective view for describing the construction of the lead acid battery of the spiral type in which the electrodes according to the present invention are incorporated. Fig. 8 has a cutout section in the part of the battery case for the purpose of describing the inside of the battery.

As shown in Fig. 8, the lead acid battery of the spiral type includes, for example, the positive plates 12 and the negative plates 13 according to the present invention like the ones shown in Figs 1 to 5. The lead acid battery of the spiral type is constructed in the same manner as that of the lead acid battery of the known spiral type except that the positive plates 12 and negative plates 13 according to the present invention are used instead of the positive plates and negative plates of the lead acid battery of the known spiral type (for example, the lead acid battery of the spiral type of battery type 38B19). A retainer 21 made of glass fiber, the positive plates 12 and negative plates 13 are layered in the order of the retainer 21, one of the positive plates 12, the retainer 22 and one of the negative plates 13, and then these are wound in spiral to form the spiral type cluster of the plates 20 in a cylindrical form. The plurality of spiral type clusters of the plates 20 is housed in the battery case 16 together with an electrolyte solution containing sulfuric acid (H₂SO₄). The positive plates 12 in the spiral type cluster of the plates 20 are electrically connected with one another in parallel. The negative plates 13 in the spiral type cluster of the plates 20 are electrically connected with one another in parallel. The spiral type clusters of the plates 20 are electrically connected with one another in series.

By using the positive plates and the negative plates according to the present invention, it is possible to obtain the lead acid battery for automobile with both the battery's capacitance being high in a high rate and the battery's power being high.

It should be noted that the present invention is not limited to the embodiments described above, and may be implemented in various embodiments. Moreover, though the electrodes shown in Figs 1 to 5 are used in the embodiments described above, the electrodes may be used for both of the positive plates 12 and the negative plates 13, or for one of them.

The present specification encompasses the contents of the specifications of Japanese Patent Application No. 2005-368346 on which the priority of the present application is based.

### Example

A more specific description will be made below using examples of the present invention, but the present invention is not limited to these examples.

### Example 1: Production of the positive plate and the negative plate

Positive plates 12a to 121 and negative plates 13a to 131 were produced by use of the processes shown in (a) to (1) below.
(a) A negative plate 13a and a positive plate 12a, both of which had the structure shown in Fig. 1, were produced.

### <Production of the negative plate>

0.3 percent by mass of lignin, 0.2 percent by mass of barium sulfate, 0.1 percent by mass of a carbon powder, and 45 percent by weight of a metallic lead powder were added to a lead powder (PbOₓ: x=0.5 to 0.9), and then polyester fibers were added thereto. This mixture was kneaded with a kneading machine for about 1 hour. 12 percent by mass of water relative to the lead powder was added to the obtained mixture, and then the mixing was performed. Furthermore, 13 percent by mass of diluted sulfuric acid (specific gravity: 1.26 at 20°C) relative to the lead powder was added thereto to prepare an active material paste for the negative plate. The active material paste for the negative plate was filled in a mold having a dimension of 116 mm×100 mm×0.8 mm, and was left stand under atmosphere conditions of 50°C temperature and 98 percent relative humidity for 18 hours for ripening. Then, this was further left stand at 110°C temperature for 2 hours to dry, and then removed from the mold to produce the negative plate 13a which was not chemically converted.

### <Production of the positive plate>

45 percent by weight of a metallic lead powder relative to a mixture of a lead powder and red lead was added to the mixture thereof. Then, polyester fibers were added thereto, and the mixture was kneaded with a kneading machine for about 1 hour. Water and diluted sulfuric acid (specific gravity: 1.26 at 20°C) were added thereto, and this was kneaded to prepare an active material paste for the positive plate. The active material paste for the positive plate was filled in a mold having a dimension of 116 mm×100 mm×0.8 mm, and was left stand under atmosphere conditions of 50°C temperature and 98 percent relative humidity for 18 hours for ripening. Then, this was further left stand at 110°C temperature for 2 hours to dry, and then removed from the mold to produce the negative plate 13a which was not chemically converted.
(b) A negative plate 13b and a positive plate 12b, both of have the structure shown in Fig. 2, were produced.

### <Production of the negative plate>

0.3 percent by mass of lignin, 0.2 percent by mass of barium sulfate, 0.1 percent by mass of a carbon powder, and 45 percent by weight of a metallic lead powder were added to a lead powder, and then polyester fibers were added thereto. This mixture was kneaded with a kneading machine for about 1 hour. 12 percent by mass of water relative to the lead powder was added to the obtained mixture, and then the mixing was performed. Furthermore, 13 percent by mass of diluted sulfuric acid (specific gravity: 1.26 at 20°C) relative to the lead powder was added thereto to prepare an active material paste for the negative plate. The active material paste for the negative plate was applied to both surfaces of the rolled plate charge collector which had a dimension of 116 mm×100 mm×0.2 mm, and which was made of lead-tin alloy, and was left stand under atmosphere conditions of 50°C temperature and 98 percent relative humidity for 18 hours for ripening. Then, this was further left stand at 110°C temperature for 2 hours to dry, thus resulting in production of the negative plate 13b which was not chemically converted.

### <Production of the positive plate>

45 percent by weight of a metallic lead powder relative to a mixture of a lead powder and red lead was added to the mixture thereof. Then, polyester fibers were added thereto, and the mixture was kneaded with a kneading machine for about 1 hour. Water and diluted sulfuric acid (specific gravity: 1.26 at 20°C) were added to the lead powder, and this was kneaded to prepare an active material paste for the positive plate. The active material paste for the positive plate was applied to both surfaces of the rolled plate charge collector which had a dimension of 116 mm×100 mm×0.2 mm, and which was made of lead-tin alloy, and was left stand under atmosphere conditions of 50°C temperature and 98 percent relative humidity for 18 hours for ripening. Then, this was further left stand at 110°C temperature for 2 hours to dry, thus resulting in production of the negative plate 13b which was not chemically converted.
(c) A negative plate 13c and a positive plate 12c, both of which had the structure shown in Fig. 3, were produced.

### <Production of the negative plate>

0.3 percent by mass of lignin, 0.2 percent by mass of barium sulfate, 0.1 percent by mass of a carbon powder, and 45 percent by weight of a metallic lead powder were added to a lead powder, and then polyester fibers were added thereto. This mixture was kneaded with a kneading machine for about 1 hour. 12 percent by mass of water relative to the lead powder was added to the obtained mixture, and then the mixing was performed. Furthermore, 13 percent by mass of diluted sulfuric acid (specific gravity: 1.26 at 20°C) relative to the lead powder was added thereto to prepare an active material paste for the negative plate. The active material paste for the negative plate was filled in a cast grid charge collector which had a dimension of 116 mm×100 mm×0.8 mm, and which was made of lead-calcium-tin alloy, and was left stand under atmosphere conditions of 50°C temperature and 98 percent relative humidity for 18 hours for ripening. Then, this was further left stand at 110°C temperature for 2 hours to dry, thus resulting in production of the negative plate 13c which was not chemically converted.

### <Production of the positive plate>

45 percent by weight of a metallic lead powder relative to a mixture of a lead powder and red lead was added to the mixture thereof. Then, polyester fibers were added thereto, and the mixture was kneaded with a kneading machine for about 1 hour. Water and diluted sulfuric acid (specific gravity: 1.26 at 20°C) were added to the lead powder, and this was kneaded to prepare an active material paste for the positive plate. The active material paste for the positive plate was filled in a cast grid charge collector which had a dimension of 116 mm×100 mm×0.8 mm, and which was made of lead-calcium-tin alloy, and was left stand under atmosphere conditions of 50°C temperature and 98 percent relative humidity for 18 hours for ripening. Then, this was further left stand at 110°C temperature for 2 hours to dry, thus resulting in production of the negative plate 12c which was not chemically converted.
(d) A negative plate 13d and a positive plate 12d, both of which had the structure shown in Fig. 4, were produced.

### <Production of the negative plate>

0.3 percent by mass of lignin, 0.2 percent by mass of barium sulfate, 0.1 percent by mass of a carbon powder, and 45 percent by weight of a metallic lead powder were added to a lead powder, and then polyester fibers were added thereto. This mixture was kneaded with a kneading machine for about 1 hour. 12 percent by mass of water relative to the lead powder was added to the obtained mixture, and then the mixing was performed. Furthermore, 13 percent by mass of diluted sulfuric acid (specific gravity: 1.26 at 20°C) relative to the lead powder was added thereto to prepare an active material paste for the negative plate. The active material paste for the negative plate was filled in an expanded metal charge collector which had a dimension of 116 mm×100 mm×0.7 mm, and which was made of lead-calcium-tin alloy, and was left stand under atmosphere conditions of 50°C temperature and 98 percent relative humidity for 18 hours for ripening. Then, this was further left stand at 110°C temperature for 2 hours to dry, thus resulting in production of the negative plate 13d which was not chemically converted.

### <Production of the positive plate>

45 percent by weight of a metallic lead powder relative to a mixture of a lead powder and red lead was added to the mixture thereof. Then, polyester fibers were added thereto, and the mixture was kneaded with a kneading machine for about 1 hour. Water and diluted sulfuric acid (specific gravity: 1.26 at 20°C) were added to the lead powder, and this was kneaded to prepare an active material paste for the positive plate. The active material paste for the positive plate was filled in an expanded metal charge collector which had a dimension of 116 mm×100 mm×0.7 mm, and which was made of lead-calcium-tin alloy, and was left stand under atmosphere conditions of 50°C temperature and 98 percent relative humidity for 18 hours for ripening. Then, this was further left stand at 110°C temperature for 2 hours to dry, thus resulting in production of the negative plate 12d which was not chemically converted.
(e) A negative plate 13e and a positive plate 12e, both of which had the structure shown in Fig. 5, were produced.

### <Production of the negative plate>

0.3 percent by mass of lignin, 0.2 percent by mass of barium sulfate, 0.1 percent by mass of a carbon powder, and 45 percent by weight of a metallic lead powder were added to a lead powder, and then polyester fibers were added thereto. This mixture was kneaded with a kneading machine for about 1 hour. 12 percent by mass of water relative to the lead powder was added to the obtained mixture, and then the mixing was performed. Furthermore, 13 percent by mass of diluted sulfuric acid (specific gravity at: 1.26 at 20°C) relative to the lead powder was added thereto to prepare an active material paste for the negative plate. The active material paste for the negative plate was filled in a perforated metal charge collector which had a dimension of 116 mm×100 mm×0.2 mm, and which was made of lead-tin alloy, and was left stand under atmosphere conditions of 50°C temperature and 98 percent relative humidity for 18 hours for ripening. Then, this was further left stand at 110°C temperature for 2 hours to dry, thus resulting in production of the negative plate 13e which was not chemically converted.

### <Production of the positive plate>

45 percent by weight of a metallic lead powder relative to a mixture of a lead powder and red lead was added to the mixture thereof. Then, polyester fibers were added thereto, and the mixture was kneaded with a kneading machine for about 1 hour. Water and diluted sulfuric acid (specific gravity: 1.26 at 20°C) were added to the lead powder, and this was kneaded to prepare an active material paste for the positive plate. The active material paste for the positive plate was filled in a perforated metal charge collector which had a dimension of 116 mm×100 mm×0.2 mm, and which was made of lead-tin alloy, and was left stand under atmosphere conditions of 50°C temperature and 98 percent relative humidity for 18 hours for ripening. Then, this was further left stand at 110°C temperature for 2 hours to dry, thus resulting in production of the negative plate 12e which was not chemically converted.
(f) A negative plate 13f and a positive plate 12f, both of which had the structure shown in Fig. 5, were produced.

### <Production of the negative plate>

0.3 percent by mass of lignin, 0.2 percent by mass of barium sulfate, 0.1 percent by mass of a carbon powder, and 45 percent by weight of a metallic lead powder were added to monobasic lead sulfate and red lead, and then polyester fibers were added thereto. This mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 13f which was not chemically converted.

### <Production of the positive plate>

45 percent by weight of a metallic lead powder relative to a mixture of monobasic lead sulfate and red lead was added to the mixture thereof. Then, polyester fibers were added thereto, and the mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 12f which was not chemically converted.
(g) A negative plate 13g and a positive plate 12g, both of which had the structure shown in Fig. 5, were produced.

### <Production of the negative plate>

0.3 percent by mass of lignin, 0.2 percent by mass of barium sulfate, 0.1 percent by mass of a carbon powder, and 15 percent by weight of a metallic lead powder were added to monobasic lead sulfate and red lead, and then polyester fibers were added thereto. This mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 13g which was not chemically converted.

### <Production of the positive plate>

15 percent by weight of a metallic lead powder was added to a mixture of monobasic lead sulfate and red lead. Then, polyester fibers were added thereto, and the mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 12g which was not chemically converted.
(h) A negative plate 13h and a positive plate 12h, both of which had the structure shown in Fig. 5, were produced.

### <Production of the negative plate>

0.3 percent by mass of lignin, 0.2 percent by mass of barium sulfate, 0.1 percent by mass of a carbon powder, and 70 percent by weight of a metallic lead powder were added to monobasic lead sulfate and red lead, and then polyester fibers were added thereto. This mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 13h which was not chemically converted.

### <Production of the positive plate>

70 percent by weight of a metallic lead powder was added to a mixture of monobasic lead sulfate and red lead. Then, polyester fibers were added thereto, and the mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 12h which was not chemically converted.
(i) A negative plate 13i and a positive plate 12i, both of which had the structure shown in Fig. 5, were produced.

### <Production of the negative plate>

0.3 percent by mass of lignin, 0.2 percent by mass of barium sulfate, 0.1 percent by mass of a carbon powder, and 70 percent by weight of the lead alloy powder shown in Table 1 were added to monobasic lead sulfate and red lead, and then polyester fibers were added thereto. This mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 13i which was not chemically converted.

### <Production of the positive plate>

70 percent by weight of a lead alloy powder shown in Table 1 was added to a mixture of monobasic lead sulfate and red lead. Then, polyester fibers were added thereto, and the mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 12i which was not chemically converted.
(j) A negative plate 13j and a positive plate 12j, both of which had the structure shown in Fig. 5, were produced.

### <Production of the negative plate>

0.3 percent by mass of lignin, 0.2 percent by mass of barium sulfate, 0.1 percent by mass of a carbon powder, and 70 percent by weight of an alloy powder composed of lead and 1.5 weight percent tin having the particle size shown in Table 1 were added to monobasic lead sulfate and red lead, and then polyester fibers were added thereto. This mixture was kneaded with a kneading machine for about 1 hour. And a half amount of this mixture was poured from both surfaces of a perforated metal charge collector which had a dimension of 116 mmx100 mmx0.2 mm, and which was made of lead-tin alloy, and was rolled by applying a weight with a powder rolling machine, thus resulting in production of the negative plate 13j which was not chemically converted.

### <Production of the positive plate>

70 percent by weight of an alloy powder composed of lead and 1.5 weight percent tin having the particle size shown in Table 1 was added to a mixture of monobasic lead sulfate and red lead. Then, polyester fibers were added thereto, and the mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 12j which was not chemically converted.
(k) A negative plate 13k and a positive plate 12k, both of which had the structure shown in Fig. 5, were produced.

### <Production of the negative plate>

0.3 percent by mass of lignin, 0.2 percent by mass of barium sulfate, 0.1 percent by mass of a carbon powder, and 70 percent by weight of the lead alloy powder composed of a rapidly-solidified powder having a particle size of 20 µm or less were added to tribasic lead sulfate and red lead, and then polyester fibers were added thereto. This mixture was kneaded with a kneading machine for about 1 hour. And a half amount of this mixture was poured from both surfaces of a perforated metal charge collector which had a dimension of 116 mmx100 mmx0.2 mm, and which was made of lead-tin alloy, and was rolled by applying a weight with a powder rolling machine, thus resulting in production of the negative plate 13k which was not chemically converted.

### <Production of the positive plate>

70 percent by weight of a lead alloy powder composed of a rapidly-solidified powder having a particle size of 20 µm or less was added to a mixture of tribasic lead sulfate and red lead. Then, polyester fibers were added thereto, and the mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 12k which was not chemically converted.
(l) A negative plate 131 and a positive plate 121, both of which had the structure shown in Fig. 5, were produced.

### <Production of the negative plate>

0.3 percent by mass of lignin, 0.2 percent by mass of barium sulfate, 0.1 percent by mass of a carbon powder, and 70 percent by weight of the lead alloy powder were added to tetrabasic lead sulfate and red lead, and then polyester fibers were added thereto. This mixture was kneaded with a kneading machine for about 1 hour. And a half amount of this mixture was poured from both surfaces of a perforated metal charge collector which had a dimension of 116 mmx100 mmx0.2 mm, and which was made of lead-tin alloy, and was rolled by applying a weight with a powder rolling machine, thus resulting in production of the negative plate 131 which was not chemically converted.

### <Production of the positive plate>

70 percent by weight of a lead alloy powder was added to a mixture of tetrabasic lead sulfate and red lead. Then, polyester fibers were added thereto, and the mixture was kneaded with a kneading machine for about 1 hour. And a half amount of this mixture was poured from both surfaces of a perforated metal charge collector which had a dimension of 116 mm×100 mm×0.2 mm, and which was made of lead-tin alloy, and was rolled by applying a weight with a powder rolling machine, thus resulting in production of the negative plate 121 which was not chemically converted.

### Comparative Example 1: Production of the negative and positive plates

### <Production of the negative plate>

0.3 percent by mass of lignin, 0.2 percent by mass of barium sulfate, and 0.1 percent by mass of a carbon powder were added to a lead powder, and then polyester fibers were added thereto. This mixture was kneaded with a kneading machine for about 10 minutes. 12 percent by mass of water relative to the lead powder was added to the obtained mixture, and then the mixing was performed. Furthermore, 13 percent by mass of diluted sulfuric acid (specific gravity: 1.26 at 20°C) relative to the lead powder was added thereto to prepare an active material paste for the negative plate. The active material paste for the negative plate was filled in the same charge collector as that of Example 1, and was left stand under atmosphere conditions of 50°C temperature and 98 percent relative humidity for 18 hours for ripening. Then, this was further left stand at 110°C temperature for 2 hours to dry, thus resulting in production of the negative plate which was not chemically converted.

### <Production of the positive plate>

Polyester fibers were added to a mixture of a lead powder and red lead, and water and diluted sulfuric acid (specific gravity: 1.26 at 20°C) were added to the lead powder. And this was kneaded to prepare an active material paste for the positive plate. The active material paste for the positive plate was filled in the same charge collector as that of Example 1, and was left stand under atmosphere conditions of 50°C temperature and 98 percent relative humidity for 18 hours for ripening. Then, this was further left stand at 110°C temperature for 2 hours to dry, thus resulting in production of the negative plate which was not chemically converted.

### Example 2: Production of the single plate lead acid battery

The single plate lead acid battery shown in Fig. 6 was produced by using the produced positive plate 12a and negative plate 13a. Diluted sulfuric acid with a specific gravity of 1.225 at 20°C was used as an electrolyte solution. It should be noted that the chemical conversion of the single plate lead acid battery was performed at 2.2 A for 20 hours. Diluted sulfuric acid having a specific gravity of 1.4 at 20°C was added thereto after the chemical conversion to adjust the concentration of the electrolyte solution so that it became a diluted sulfuric acid having a specific gravity of 1.28 at 20°C. The battery capacitance of the obtained single plate lead acid battery was 1.75 Ah, and the average discharging voltage thereof was 2V.

### Comparative Example 2: Production of the single plate lead acid battery

The single plate lead acid battery was produced in the same manner as that of Example 2 except that the electrodes produced in Comparative Example 1 were used.

### <Discharge test>

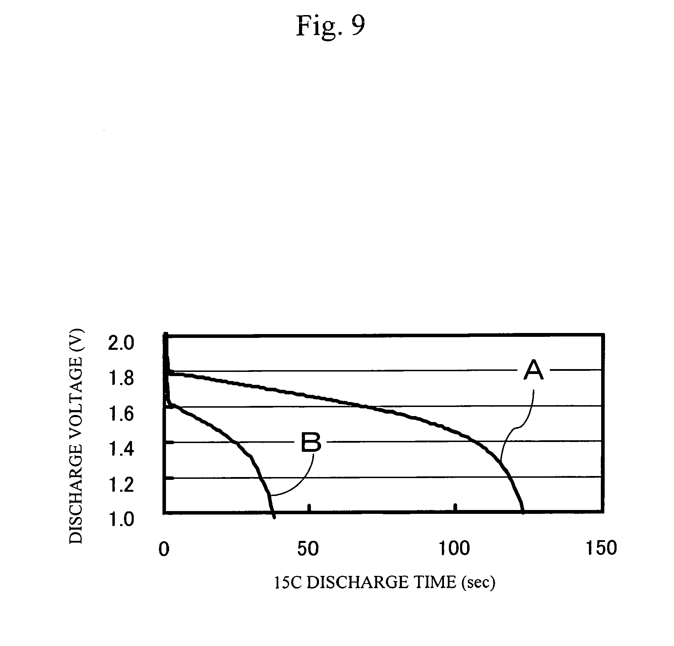

The single plate lead acid battery of Example 2 produced in the above manner was discharged at 15 CA. The discharge curve at this time is shown as "A" in Fig. 9. It should be noted that "15 CA" refers to a value of a current which allows the battery capacitance to be discharged in one fifteenth of an hour. In the present embodiment, "15 CA" was equivalent to 26A. Moreover, the discharge time in which the single plate lead acid battery of Example 2 was discharged at 15 CA, and the discharge voltage 10 seconds after starting the discharge were measured. The results are shown in Table 1.

In addition, the discharge curve obtained when the single plate lead acid battery of Comparative Example 2 was discharged at 15 CA (26A) is shown as "B" in Fig. 9. The discharge time in which the single plate lead acid battery of the Comparative example was discharged at 15 CA, and the discharge voltage 10 seconds after starting the discharge were also measured. The results are shown in Table 1.

As shown in Fig. 9 and Table 1, it is understood that the single plate lead acid battery of Example 2 is discharged at a high voltage, and in a long discharge time. On the other hand, the single plate lead acid battery of Comparative Example 2 is discharged at a lower voltage and in a shorter discharge time than the case of the single plate lead acid battery of Example 2.

### Example 3: Production of the lead acid battery for automobile

The single plate lead acid battery for automobile shown in Fig. 7 was produced by using the positive plates 12h and the negative plates 13h produced in Example 1. Separators each having a thickness of 1.5 mm and made of polyethylene resin were used as the separators 10. Five sheets of the negative plates 13 and four sheets of the positive plates 12 were used in the cluster of layered plates 19. Diluted sulfuric acid having a specific gravity of 1.25 at 20°C was used as an electrolyte solution. It should be noted that the chemical conversion of the lead acid battery for automobile was performed at 9A for 20 hours. Diluted sulfuric acid having a specific gravity of 1.4 at 20°C was added after the chemical conversion to adjust the concentration of the electrolyte solution so that it became a diluted sulfuric acid having a specific gravity of 1.28 at 20°C. Regarding the obtained lead acid battery, the battery capacitance was 28 Ah, and the average discharging voltage thereof was 12V.

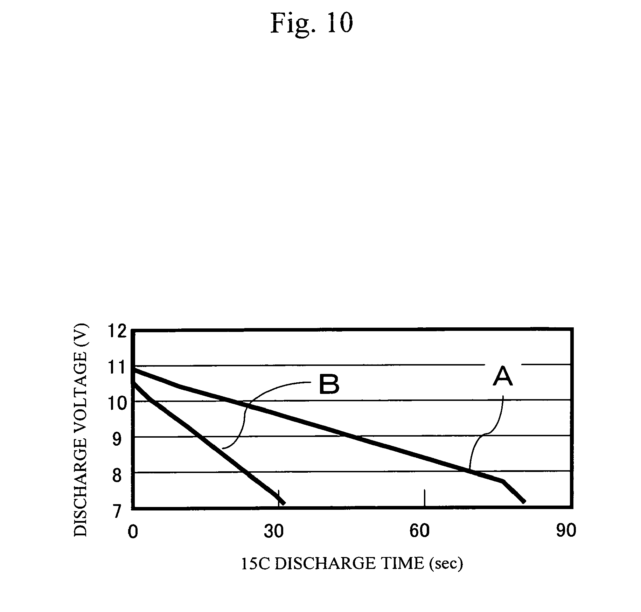

The discharge time at the time when this lead acid battery was discharged at 15 CA and the discharge voltage then obtained were measured. The result is shown as "A" in Fig. 10.

### Comparative Example 3: Production of the lead acid battery for automobile

The lead acid battery for automobile was produced in the same manner as that of Example 3 except that the positive plates and the negative plates produced in Comparative Example 1 were used as positive plates and negative plates. Regarding the obtained lead acid battery, the battery capacitance was 28 Ah, and the average discharge voltage was 12V.

The discharge time at the time when this lead acid battery was discharged at 15 CA and the discharge voltage then obtained were measured. The result is shown as "B" in Fig. 10.

### Example 4: Production of the spiral-type lead acid battery

The spiral-type lead acid battery shown in Fig. 8 was produced in the following procedures.

### <Production of the negative plate>

An active material paste for the negative plate was prepared in the same manner as that of the negative plate 13b of Example 1. Then, the active material paste for the negative plate was applied to both surfaces of the rolled plate charge collector which had a dimension of 116 mmx1000 mmx0.2 mm, and which was made of lead-tin alloy, and was left stand under atmosphere conditions of 50°C temperature and 98 percent relative humidity for 18 hours for ripening. Then, this was further left stand at 110°C temperature for 2 hours to dry, thus resulting in production of the negative plate.

### <Production of the positive plate>

An active material paste for the positive plate was prepared in the same manner as that of the positive plate 12b of Example 1. Then, the active material paste for the positive plate was applied to both surfaces of the rolled plate charge collector which had a dimension of 116 mm×1000 mm×0.2 mm, and which was made of lead-tin alloy, and was left stand under atmosphere conditions of 50°C temperature and 98 percent relative humidity for 18 hours for ripening. Then, this was left stand at 110°C temperature for 2 hours to dry, thus resulting in production of the positive plate.

### Production of the spiral-type lead acid battery

The spiral-type lead acid battery shown in Fig. 8 was produced by using the produced positive plates and negative plates, and the retainers 22 which are made of glass fiber, and which are 0.6 mm thick. Diluted sulfuric acid having a specific gravity of 1.28 at 20°C was used as an electrolyte solution. Diluted sulfuric acid having a specific gravity of 1.4 at 20°C was added after the chemical conversion of the spiral-type lead acid battery to adjust the concentration of the electrolyte solution so that it became a diluted sulfuric acid having a specific gravity of 1.28 at 20°C. Regarding the obtained spiral-type lead acid battery, the battery capacitance was 16 Ah, and the average discharging voltage was 12V.

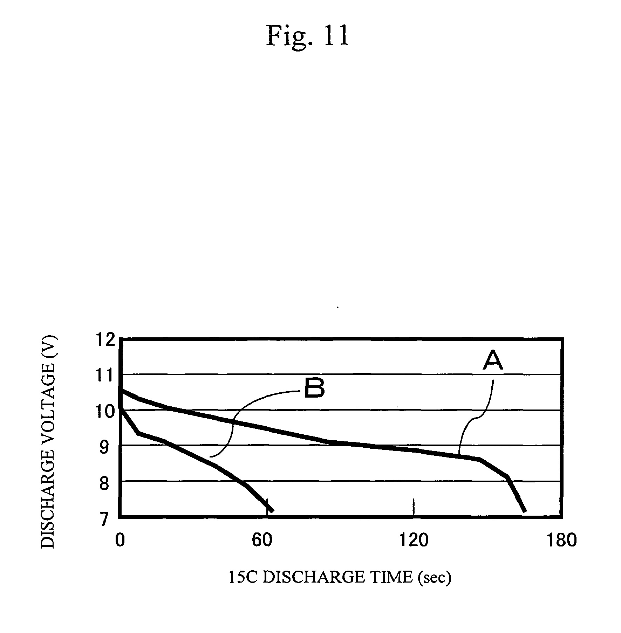

The discharge time at the time when this spiral type lead acid battery was discharged at 15 CA and the discharge voltage then obtained were measured. The result is shown as "A" in Fig. 11.

### Comparative Example 4: Production of the spiral-type lead acid battery

The spiral-type lead acid battery was produced in the same manner as that of Example 4 except that the positive plates and the negative plates produced in Comparative Example 1 were used as positive plates and negative plates. Regarding the obtained lead acid battery, the battery capacitance was 16 Ah, and the average discharge voltage was 12V.

The discharge time at the time when this lead acid battery was discharged at 15 CA and the discharge voltage then obtained were measured. The result is shown as "B" in Fig. 11.

### <Evaluation of discharge time>

As apparent from Figs. 9, 10 and 11, it is understood that the lead acid battery of the present invention is discharged in a longer time and at a higher voltage after starting discharge than the cases of the lead acid batteries of Comparative Examples.

**Table 1**

| | Electrode system | Composition of a lead-containing metallic powder | Average particle size of a lead-containing metallic powder | Voltage 10 seconds after starting discharge | Discharge time |
|---|---|---|---|---|---|
| | | - | (µm) | (V) | (seconds) |
| Example 1 | 12a | Pb | 25 | 1.71 | 102 |
| | 13a | | | 1.77 | 98 |
| | 12b | | | 1.74 | 95 |
| | 13b | | | 1.76 | 97 |
| | 12c | | | 1.74 | 99 |
| | 13c | | | 1.79 | 85 |
| | 12d | | | 1.76 | 87 |
| | 13d | | | 1.78 | 76 |
| | 12e | | | 1.77 | 89 |
| | 13e | | | 1.74 | 88 |
| | 12f | | | 1.78 | 79 |
| | 13f | | | 1.75 | 83 |
| | 12g | | | 1.77 | 93 |
| | 13g | | | 1.73 | 76 |
| | 12h | | | 1.77 | 124 |
| | 13h | | | 1.76 | 127 |
| | 12i | Pb-0.2%Sn | | 1.74 | 113 |
| | | Pb-0.2%Sb | | 1.78 | 121 |
| | | Pb-5%Sn | | 1.7 | 100 |
| | | Pb-5%Sb | | 1.69 | 105 |
| | | Pb-0.2%Ca-0.6% Sn | | 1.71 | 114 |
| | 13i | Pb-0.2%Sn | | 1.73 | 118 |
| | 12j | Pb-1.5%Sn | 0.01 | 1.7 | 105 |
| | | | 500 | 1.72 | 100 |
| | | | 0.1 | 1.78 | 122 |
| | | | 50 | 1.79 | 124 |
| | 13j | | 0.1 | 1.77 | 119 |
| | 12k | | 25 | 1.74 | 117 |
| | 13k | | | 1.75 | 119 |
| | 12l | | | 1.73 | 114 |
| | 13l | | | 1.76 | 118 |
| Comparative Example 1 | - | | | 1.64 | 40 |

### Industrial Applicability

According to the present invention, it is possible to obtain a lead acid battery which is discharged for a long time, and which constantly generates a high power. The lead acid battery of the present invention is useful for the battery for automobile such as an idling-stop vehicle and a hybrid vehicle, and for the battery used in the equipment which requires a large amount of a current and a high power at the time of start-up, etc.

All publications cited herein are hereby incorporated as reference in their entirety.

## Claims

1. A lead acid battery comprising electrodes for a lead acid battery, each of the electrodes containing an active material and a metallic powder containing lead composed of any one of a metallic lead powder and a lead alloy powder, and each of the electrodes having a structure in which the metallic powder containing lead is disorderly distributed.

2. The lead acid battery according to claim 1, wherein the lead alloy contains 0.1 to 10 percent by weight of at least one selected from the group consisting of Sn, Sb and Ca.

3. The lead acid battery according to claim 1, wherein the metallic powder containing lead is a rapidly-solidified powder having a crystal size of 20 µm or less.

4. The lead acid battery according to claim 1, wherein the metallic powder containing lead has an average particle size of 0.01 to 500 µm.

5. The lead acid battery according to claim 1, wherein the active material contains red lead and at least one selected from the group consisting of monobasic lead sulfate, tribasic lead sulfate and tetrabasic lead sulfate.

6. The lead acid battery according to claim 1 further comprising, as each of charge collectors, any one of an expanded metal, a cast grid, a rolled grid, a rolled plate and a perforated metal, each of which is made of a lead alloy.

7. The lead acid battery according to claim 1, wherein 15 to 70 percent by weight of the metallic powder containing lead is present in the electrodes excluding the charge collectors.

8. The lead acid battery according to claim 1, wherein the lead acid battery is a spiral type lead acid battery.
